# EUROPÄISCHE PATENTANMELDUNG

(11) **EP 2 363 741 A2**
(43) Veröffentlichungstag der Anmeldung: **07.09.2011**
(21) Anmeldenummer: 11001586.4
(22) Anmeldetag: 25.02.2011
(51) Int. Cl.: G02B 26/02, G09F 9/37

(54) **Sicherheitselement mit einem Anzeigeelement**

(30) Priorität: 02.03.2010 DE 102010009890
(71) Anmelder: Advanced Display Technology AG, 9050 Appenzell (CH)
(72) Erfinder: Bitman, Andriy, Dipl.-Ing., 44147 Dortmund (DE); Blankenbach, Karlheinz, Prof. Dr., 75175 Pforzheim (DE); Jerosch, Dieter, 65812 Bad Sogen (DE); Rawert, Dr.Dipl.-Chem Jürgen, 50933 Köln (DE); Müller-Marc, Oliver, 9050 Appenzell (CH); Bartels, Dr. Frank, 45527 Hattingen (DE)
(74) Vertreter: Tönhardt, Marion

(57) **Zusammenfassung**

Die Erfindung betrifft ein Sicherheitselement mit zumindest einem Anzeigeelement für die nichtrücksetzbare visuelle Anzeige von Information, bei dem das Anzeigeelement ein erstes und ein zweites Volumen, die über zumindest einen Kanal miteinander fluidisch verbunden sind und genau eine elektrisch ansteuerbare Elektrode aufweist, die genau einem der Volumen beigeordnet und darauf ausgelegt ist, unter Beaufschlagung mit einer elektrischen Spannung die Oberflächenspannung einer Flüssigkeit, die sich in dem beigeordneten Volumen befindet, zu variieren, wobei die Flüssigkeit zumindest einen elektrisch leitenden und/oder polaren und einen unpolaren Anteil aufweist, und zumindest der elektrisch leitende Anteil vollständig und stabil in demjenigen der beiden Volumina vorgehalten wird, welchem die Elektrode nicht beigeordnet ist, und wobei der elektrisch leitende und/oder polare Anteil irreversibel und zumindest teilweise infolge einmaliger Beaufschlagung der Elektrode in das Volumen dem die Elektrode beigeordnet ist, bewegbar ist.

## Beschreibung

Die Erfindung betrifft ein Sicherheitselement mit zumindest einem Anzeigeelement für die nichtrücksetzbare visuelle Anzeige von Information.

Es ist bekannt, Anzeigen mit Hilfe von farbigen Flüssigkeiten zu realisieren, wozu diese zwischen für einen Betrachter nicht einsehbaren und einsehbaren Positionen verlagert werden können. Ein effizientes Mittel für die Verlagerung der Flüssigkeiten ist das sogenannte Elektrowetting, bei dem eine sich in unmittelbarer Nachbarschaft des Flüssigkeitstropfens befindliche Elektrode mit einer Spannung beaufschlagt wird, infolge welcher sich die Oberflächenenergie und damit die Oberflächenspannung der Flüssigkeit erhöht. Dies kann je nach Anordnung dazu führen, dass sich die Flüssigkeit auf der Elektrode ausbreitet, oder diese sogar vollständig bedeckt, je nachdem welche Geometrie und Oberflächenbeschaffenheit die Elektrode aufweist und in welcher relativen Lage sich die Flüssigkeit und die Elektrode auch bezüglich des Erdgravitationsfeldes befinden. Es ist bekannt, die Elektroden mit einer hydrophoben Beschichtung zu versehen, um auf diese Weise einen maximalen Effekt zwischen dem Zustand der Flüssigkeit bei nicht beaufschlagter Elektrode und beaufschlagter Elektrode zu erzielen. Bereits mit den vorgenannten Mitteln ist es möglich, eine Tropfenbewegung zu realisieren, ohne dabei auf weitere funktionale Elemente zurückgreifen zu müssen.

Die Änderung der Oberflächenenergie zieht im Falle eines einzelnen Tropfens eine Änderung des Kontaktwinkels nach sich, mit welchem der Tropfen die Unterlage benetzt. Der Zusammenhang zwischen der Feldstärke und der Änderung des Kontaktwinkels wird durch die Lippmann-Young-Gleichung beschrieben und ist dem Fachmann bekannt.

Durch eine lokale Variation der elektrischen Feldstärke kann demnach die lokale Oberflächenenergie der Flüssigkeit modifiziert und somit die Geometrie eines Tropfens lokal verändert werden. Insbesondere kann durch das Erzeugen einer lokal erhöhten Oberflächenenergie eine Bewegung des Tropfens erfolgen, indem sich dieser bevorzugt in den entsprechenden, durch das Vorhandensein eines elektrischen Feldes gekennzeichneten Bereich ausdehnt. Umgekehrt wird Flüssigkeit aus dem Bereich, in dem sie unbeeinflusst ist und somit eine geringere Oberflächenenergie aufweist, herausgedrückt, da sie in diesem Bereich der energieärmsten Geometrie, nämlich der einer Kugelform, zustrebt. Daraus resultiert ein Nettotransport von Flüssigkeit aus dem Bereich geringer in den Bereich hoher Feldstärke.

Auf dieser Basis sind bereits eine Vielzahl unterschiedlicher Anzeigen realisiert worden. Üblicherweise war es dabei stets das Ziel, ein elektronisch steuerbares bistabiles Anzeigeelement zu erzeugen, welches wahlweise den einen oder den anderen Zustand einnimmt. So ist es beispielsweise bekannt, eine Flüssigkeit zwischen einem ersten und einem zweiten Volumen, welche über einen Kanal miteinander verbunden sind, mit Hilfe des Elektrowettingeffektes hin- und herzutransportieren, wozu jedes Volumen eine beigeordnete Elektrode aufweist, so dass sich die Transportrichtung jeweils aus dem Feldstärkenverhältnis zwischen beiden Elektroden ergibt. Vorzugsweise wird jeweils nur diejenige Elektrode mit einem Potential beauftragt, in deren Richtung die Flüssigkeit transportiert werden soll.

Für die Realisierung eines Sicherheitselementes ist es wünschenswert, etwa um eine unerwünschte Manipulation sichtbar zu machen oder zu verhindern, wenn sich eine einmal eingetretene Zustandsänderung nicht mehr rückgängig machen lässt.

Wäre dies auf Basis der eingangs beschriebenen Elektrowetting-Technologie möglich, so könnte ihr gesamter im Stand der Technik dokumentierter Erfahrungsschatz dazu verwendet werden, Sicherheitselemente zu realisieren, die beispielsweise sehr einfach und intuitiv das Überschreiten von Lagertemperaturen anhand eines Farbumschlags durch Verlagerung eines farbigen Fluids anzeigen. Es könnte somit auf die zu den vorgenannten Zwecken bisher verwandten meist technisch komplexen Vorrichtungen verzichtet werden, welche häufig auch nicht der unerlaubten Manipulation vorbeugen können.

So ist beispielsweise aus der US 7,310,080 B2 eine nichtrücksetzbare Anzeige bekannt, bei der die Nichtrücksetzbarkeit dadurch erreicht wird, dass sich eine Linse aus einer einmal eingenommenen Position, in der beispielsweise eine Textnachricht lesbar wird, nicht wieder zurück in eine Ausgangsposition verlagern kann. Der Druckschrift ist weiterhin zu entnehmen, dass die Fixierung der Linse mit Hilfe jeglicher Verriegelungsmittel ausgeführt sein kann, ohne diese näher zu spezifizieren.

Die US 2009/0042065 A1 offenbart ein Sicherheitselement, bei dem eine poröse Barriere ein erstes und ein zweites Volumen fluidisch voneinander trennt. In dem ersten Volumen wird ein Elektrolyt vorgehalten, das infolge eines sicherheitsrelevanten Ereignisses durch die Barriere hindurch und in dem zweiten Volumen mit Elektroden in Kontakt tritt. Infolge einer chemischen Reaktion zwischen dem Elektrolyt und den Elektroden fällt an den Elektroden eine elektrische Spannung ab, die als Anzeige des sicherheitsrelevanten Ereignisses dient.

Die DE 10 2008 020 133 A1 offenbart ein Sicherheitsanzeigeelement, bei dem zwei Volumina über einen Kanal miteinander verbunden sind, wobei eine einheitliche Elektrode sowohl beide Volumina als auch den Verbindungskanal abdeckt.

Es ist somit die Aufgabe der Erfindung, ein Sicherheitselement vorzuschlagen, welches sich bekannter Elektrowetting-Technologie bedient, eine nicht rücksetzbare visuelle Anzeige einer sicherheitsrelevanten Information bietet, dabei leicht ablesbar, flexibel in der Anwendung und preiswert herstellbar ist und gleichzeitig Manipulationen nicht zulässt.

Diese Aufgabe löst erfindungsgemäß ein Sicherheitselement nach Patentanspruch 1. Vorteilhafte Ausführungsformen sind Gegenstand der abhängigen Ansprüche.

Bei dem erfindungsgemäßen Sicherheitselement mit zumindest einem Anzeigeelement für die nicht rücksetzbare visuelle Anzeige von Information weist das Anzeigeelement auf:
- ein erstes und ein zweites Volumen, die über zumindest einen Kanal miteinander fluidisch verbunden sind, wobei ein Volumen einsehbar und das andere nicht einsehbar ausgebildet ist; und
- genau eine elektrisch ansteuerbare Elektrode, die genau einem der Volumen beigeordnet und darauf ausgelegt ist, unter Beaufschlagung mit einer elektrischen Spannung die Oberflächenspannung einer Flüssigkeit, die sich in dem beigeordneten Volumen befindet, zu variieren;
wobei die Flüssigkeit zumindest einen elektrisch leitenden und/oder polaren und einen unpolaren Anteil aufweist, und zumindest der elektrisch leitende und/oder polare Anteil vollständig und stabil in demjenigen der beiden Volumina vorgehalten wird, welchem die Elektrode nicht beigeordnet ist, und wobei der elektrisch leitende und/oder polare Anteil irreversibel und zumindest teilweise infolge einmaliger Beaufschlagung der Elektrode in das Volumen, dem die Elektrode beigeordnet ist, bewegbar ist.

Dem Fachmann wird deutlich, dass sich das erfindungsgemäße Sicherheitselement ausschließlich auf für ihn bekannte technische Mittel beschränkt, wie sie dem Stand der Technik zur Nutzbarmachung des Elektrowetting-Effektes zu entnehmen sind. Lediglich beispielhaft sei auf die EP 1 090 384 B1 verwiesen, welche ein reflektives Display betrifft, das den Elektrowetting-Effekt nutzt. Aus der DE 10 2008 020 133 A1 ist ein Sicherheitsanzeigeelement für binäre Information bekannt, welches ebenfalls auf dem Elektrobenetzungseffekt beruht und eine Vielzahl konstruktiver Details offenbart, die dem Fachmann auch bei der Ausführung der vorliegenden Erfindung nützlich sein werden. Ebenso betrifft die DE 10 2008 020 130 A1 eine fluidische Mehrfarbenanzeige, mit konstruktiven Merkmalen, welche auch zur Realisierung des offenbarten Sicherheitselementes beitragen können. Die DE 10 2007 063 343 A1 betrifft die Verwendung eines Fluidgemisches zur Elektrobenetzung und wird dem Fachmann bei der Wahl geeigneter Flüssigkeiten für die Realisierung des erfindungsgemäßen Sicherheitselementes behilflich sein.

Unter Verwendung eines aus dem Stand der Technik bekannten Elektrowettinganzeigeelementes ist der Gegenstand der vorliegenden Erfindung dadurch erreichbar, dass nur einem der jeweils zwei Volumen, welche über einen Kanal fluidisch miteinander verbunden sind, eine Elektrode beigeordnet wird. Es ist auch denkbar, das erfindungsgemäße Sicherheitselement unter Verwendung der bekannten Elektrowettinganzeigeelemente zu realisieren, indem jeweils diejenigen Elektroden, die zum Ansteuern einer der beiden Transportrichtungen notwendig sind, nicht ausgeführt bzw. nicht ansteuerbar sind.

Es ist erfindungsgemäß vorgesehen, dass zumindest der elektrisch leitende und/oder polare Anteil der Flüssigkeit in dem Volumen, welchem keine Elektrode zugeordnet ist, vorgehalten wird. Je nach Ausführungsform kann ein einziger Aktivierungsimpuls, welcher die elektrische Beaufschlagung der elektrisch ansteuerbaren Elektrode bewirkt, genügen, um diesen Flüssigkeitsanteil in das Volumen zu transportieren, welchem die Elektrode beigeordnet ist. Da das Volumen, in welchem der polare Flüssigkeitsanteil vor dem Eintritt des Aktivierungsimpulses vorgelagert war, keine Elektrode beigeordnet ist, ist eine Rückverlagerung der Flüssigkeit ohne die Zerstörung des Sicherheitselementes nicht möglicht. Auch die Rückverlagerung der Flüssigkeit durch Stoßen, Schlagen, Schütteln und dergleichen kann durch eine entsprechend enge Ausführung des Kanals auf sehr hohe G-Werte begrenzt werden. Auch ist es möglich, dem Kanal eine zweckmäßig ausgeführte Übergangsstruktur zu verleihen, welche den Rücktransport verhindert. Weitere Einzelheiten dazu sind der nachfolgenden Beschreibung zu entnehmen.

Erfindungsgemäß ist entweder das erste oder das zweite Volumen einsehbar und das jeweils andere nicht einsehbar ausgebildet. Auf diese Weise ist es beispielsweise möglich, unter Verwendung eines farbigen elektrisch leitenden und/oder polaren Anteils der Flüssigkeit ein Sicherheitselement zu realisieren, bei dem eine Farbinformation in Abhängigkeit des Zustands des Sicherheitselementes angezeigt bzw. nicht angezeigt wird. Es wird bevorzugt, den elektrisch leitenden und/oder polaren Anteil der Flüssigkeit in dem nicht einsehbaren Volumen vorzuhalten.

Je nach Ausführungsform kann es zweckmäßig sein, dass der elektrisch leitende und/oder polare Anteil der Flüssigkeit eine eingefärbte wässrige Lösung und der unpolare Anteil der Flüssigkeit eine Trägerflüssigkeit ist, die sich nicht mit dem elektrisch leitenden und/oder polaren Anteil mischt. Besonders bevorzugt ist die Trägerflüssigkeit transparent oder annähernd transparent. Bevorzugt ist der elektrisch leitende und/oder polare Anteil ein Polyethylencarbonat.

Je nach Ausführungsform können das erste und das zweite Volumen in einer gemeinsamen oder in verschiedenen Ebenen liegen. Für die Realisierung besonders flach bauender Sicherheitselemente, welche beispielsweise auch als Aufkleber Verwendung finden sollen, ist es zweckmäßig, die Volumina in einer gemeinsamen Ebene nebeneinander anzuordnen, so dass auch der die Volumina verbindende Kanal in der gemeinsamen Ebene liegt.

Bei einer anderen Ausführungsform der Erfindung liegen das erste und das zweite Volumen in verschiedenen Ebenen. So ist es beispielsweise möglich, dass die beiden Volumina übereinander angeordnet sind, so dass das einsehbare Volumen das nichteinsehbare gerade verdeckt.

In Abhängigkeit der bevorzugten Anwendung des erfindungsgemäßen Sicherheitselementes kann es zweckmäßig sein, dass das erste und das zweite Volumen über einen gekrümmten oder einen geknickten Kanal miteinander verbunden sind. Diese Ausführungsform ist sowohl für Volumina zweckmäßig, die in einer gemeinsamen Ebene liegen, als auch für Volumina, die in verschiedenen Ebenen liegen. Gekrümmte und geknickte Verbindungskanäle haben insbesondere den Vorteil, dass sie eine Manipulation des Sicherheitselementes durch Stoßen, Schütteln und dergleichen erschweren.

Zur Erschwerung der Manipulation eines erfindungsgemäßen Sicherheitselementes, wobei Manipulation vorliegend stets als der Versuch verstanden werden soll, ein einmal aktiviertes Sicherheitselement zurückzusetzen, weist bei einer anderen Ausführungsform der Erfindung der Kanal ein Einwegeventil auf, mit Durchlassrichtung von dem Volumen ohne beigeordnete Elektrode zu dem Volumen mit beigeordneter Elektrode. Dabei kann vorgesehen sein, dass die Wirkung des Ventils bei Elektrodenbeaufschlagung für den Flüssigkeitsaustausch unterbrochen ist.

Bei einer anderen Ausführungsform wird die Manipulationssicherheit dadurch erhöht, dass das Material der Innenfläche des Kanals derart auf den elektrisch leitenden und/oder polaren Anteil abgestimmt ist, dass dieser die Kanalinnenfläche nicht benetzt, wenn die Elektrode nicht beaufschlagt ist. Diese Ausführungsform macht sich somit den Effekt der Kapillardepression zunutze.

Bei einer anderen Ausführungsform der Erfindung ist vorgesehen, dass das Volumen mit beigeordneter Elektrode einen Stoff beinhaltet, der mit dem elektrisch leitenden und/oder polaren Anteil in dem einsehbaren Volumen zu einem farbigen Reaktionsprodukt chemisch reagiert, wenn der elektrisch leitende und/oder polare Anteil infolge der Beaufschlagung der Elektrode in das Volumen mit beigeordneter Elektrode transportiert wird. Auf diese Weise ist es beispielsweise auch möglich, eine Flüssigkeit zu verwenden, bei der der elektrisch leitende und/oder polare Anteil transparent oder nur schwach eingefärbt ausgeführt ist. Darüber hinaus kann diese Ausführungsform mit Anzeigeelementen realisiert werden, bei denen nur ein Volumen oder beide Volumina einsehbar ausgebildet sind.

Bei einer Weiterbildung der vorgenannten Ausführungsform ist vorgesehen, dass zumindest ein Reaktionsprodukt eine höhere Viskosität als der elektrisch leitende und/oder polare Anteil der Flüssigkeit aufweist, oder dem elektrisch leitenden und/oder polaren Anteil eine höhere Zähigkeit verleiht. Diese Ausführungsform weist eine erhöhte Sicherheit gegenüber Manipulationen auf.

Grundsätzlich können die erfindungsgemäß vorgesehenen über einen Kanal miteinander fluidisch verbundenen Volumina auch dadurch ausgeführt sein, dass ein einziges, entsprechend großes Volumen, eine Verengung aufweist, die das Volumen in zwei Teilvolumina aufteilt.

Weitere Einzelheiten der Erfindung werden anhand der nachfolgenden Figuren beschrieben. Dabei zeigt:
- Figur 1: ein erfindungsgemäßes Sicherheitselement mit genau einem Anzeigeelement;
- Figur 2: ein Anzeigeelement mit geknicktem Kanal;
- Figur 3: ein Anzeigeelement mit geschwungenem Kanal; und
- Figur 4: eine Ausschnittsansicht eines Sicherheitselements mit einer Vielzahl Anzeigeelemente.

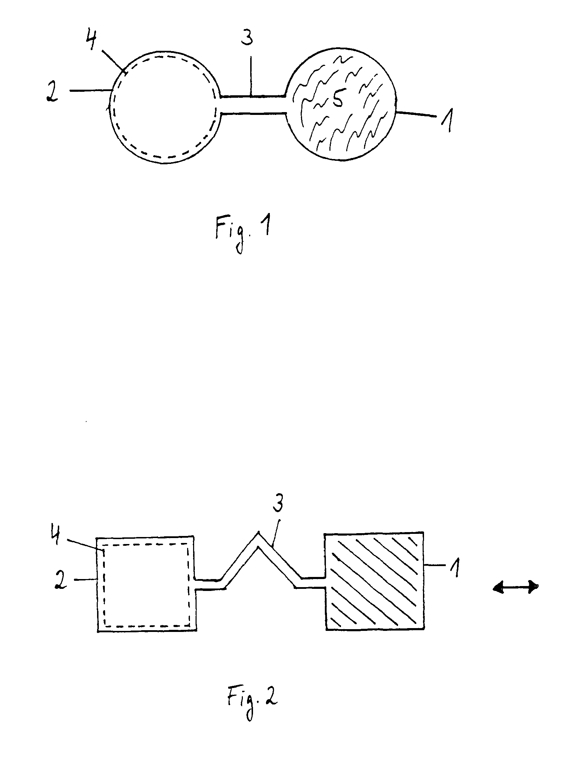

Figur 1 zeigt eine schematische Darstellung eines erfindungsgemäßen Sicherheitselements mit genau einem Anzeigeelement. Dabei weist das Anzeigeelement ein erstes Volumen 1 und ein zweites Volumen 2 auf, die über einen Kanal 3 fluidisch miteinander verbunden sind. Das zweite Volumen 2 umfasst eine Elektrode 4, welche durch die gestrichelte Linie angedeutet ist. Da sich in der Darstellung die Flüssigkeit 5 noch in dem Volumen 1 befindet, welchem nicht die Elektrode 4 beigeordnet ist, befindet sich das Sicherheitselement der Figur 1 in dem unaktivierten Zustand.

Der Vollständigkeit halber sei darauf hingewiesen, dass die Darstellung in Figur 1 sowie die der nachfolgenden Figuren lediglich diejenigen Merkmale offenbaren, welche für das Verständnis der Erfindung relevant sind. Somit sind beispielsweise nicht die Ansteuerelektronik für die Elektrode oder eventuelle Substrate bzw. Abdeckelemente dargestellt, zwischen denen das erfindungsgemäße Sicherheitselement ausgebildet sein kann. So kann es beispielsweise vorgesehen sein, das Sicherheitselement gemäß Figur 1 zwischen zwei starren oder flexiblen Substraten auszubilden, wobei zumindest ein Substrat zumindest im Bereich des zweiten Volumens 2 transparent ausgebildet ist.

Figur 2 zeigt eine weitere Ausführungsform, bei der das erste Volumen 1 und das zweite Volumen 2 über einen geknickten Kanal 3 miteinander verbunden sind. Während das zweite Volumen 2 wiederum die Elektrode 4 aufweist, ist das erste Volumen uneinsehbar ausgebildet, was durch die Schraffierung verdeutlicht werden soll. Dadurch, dass der Kanal 3 geknickt ausgeführt ist, ist das dargestellte Sicherheitselement davor geschützt, durch beschleunigte Bewegungen in Pfeilrichtung, beispielsweise durch Schütteln, manipuliert zu werden.

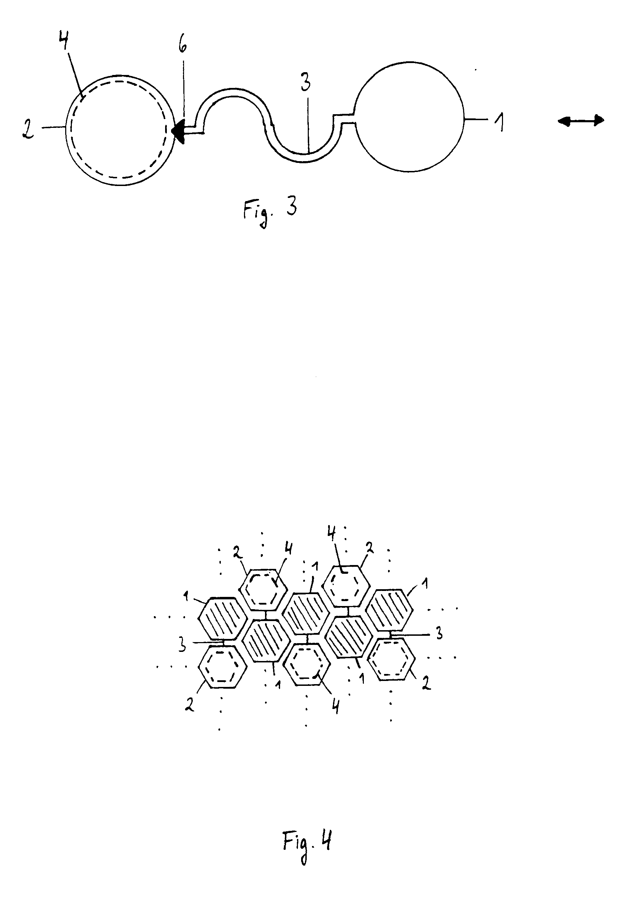

Figur 3 zeigt eine weitere Ausführungsform eines Anzeigeelementes, bei der wiederum ein erstes Volumen 1 mit einem zweiten Volumen 2, das eine Elektrode 4 umfasst, über einen Kanal 3, der geschwungen ausgeführt ist, miteinander verbunden ist. Wie bereits bei der Ausführungsform gemäß Figur 2 ist der geschwungene Verlauf des Kanals 3 dazu vorgesehen, das dargestellte Anzeigeelement vor Manipulationsversuchen, wie Schütteln in Pfeilrichtung, zu schützen. Zusätzlich weist die dargestellte Ausführungsform ein Einwegeventil 6 auf, welches sich am Übergang zwischen dem Kanal 3 und dem zweiten Volumen 2 befindet. Es sei darauf hingewiesen, dass das Einwegeventil 6 nicht zwingend in Kombination mit einem geschwungenen oder geknickten Kanal 3 vorgesehen sein muss, sondern auch als einziges Mittel zur Vorbeugung von Manipulation dienen kann. Darüber hinaus kann das Ventil 6 auch an einer beliebigen Position des Kanals 3 angeordnet sein. Sinnvollerweise weist das Ventil 6 eine Durchlassrichtung in Richtung des zweiten Volumens 2 auf. Auf diese Weise wird gewährleistet, dass die infolge eines Aktivierungsimpulses einmal von dem ersten Volumen 1 in das zweite Volumen 2 gelangte Flüssigkeit zurück in das erste Volumen 1 transportiert werden kann.

Figur 4 zeigt einen Ausschnitt aus einem erfindungsgemäßen Sicherheitselement, welches eine Vielzahl Anzeigeelemente, etwa gemäß den Figuren 1 bis 3, aufweist. Sind die Elektroden 4 gemeinsam ansteuerbar und dazu elektrisch miteinander verbunden, so ist es möglich, mit Hilfe eines derartigen Sicherheitselementes, eine komplexe Information, beispielsweise ein Symbol oder ein Wort infolge eines Aktivierungsimpulses auszugeben.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 1: Erstes Volumen
- 2: Zweites Volumen
- 3: Kanal
- 4: Elektrode
- 5: Flüssigkeit
- 6: Einwegeventil

## Patentansprüche

1. Sicherheitselement mit zumindest einem Anzeigeelement für die nichtrücksetzbare visuelle Anzeige von Information, bei dem das Anzeigeelement aufweist:
- ein erstes und ein zweites Volumen (1, 2), die über zumindest einen Kanal (3) miteinander fluidisch verbunden sind; wobei ein Volumen (1, 2) einsehbar und das andere nicht einsehbar ausgebildet sind; und
- genau eine elektrisch ansteuerbare Elektrode (4), die genau einem der Volumina (1, 2) beigeordnet und darauf ausgelegt ist, unter Beaufschlagung mit einer elektrischen Spannung die Oberflächenspannung einer Flüssigkeit (5), die sich in dem beigeordneten Volumen (1, 2) befindet, zu variieren;
wobei die Flüssigkeit (5) zumindest einen elektrisch leitenden und/oder polaren und einen unpolaren Anteil aufweist, und zumindest der elektrisch leitende Anteil vollständig und stabil in demjenigen der beiden Volumina (1, 2) vorgehalten wird, welchem die Elektrode (4) nicht beigeordnet ist, und wobei der elektrisch leitende und/oder polare Anteil irreversibel und zumindest teilweise infolge einmaliger Beaufschlagung der Elektrode (4) in das Volumen (1, 2), dem die Elektrode (4) beigeordnet ist, bewegbar ist.

2. Sicherheitselement nach Anspruch 1, **dadurch gekennzeichnet, dass** der elektrisch leitende und/oder polare Anteil der Flüssigkeit (5) in dem nicht einsehbaren Volumen (1, 2) vorgehalten wird.

3. Sicherheitselement nach Anspruch 1, **dadurch gekennzeichnet, dass** das erste und das zweite Volumen (1, 2) in einer gemeinsamen Ebene liegen.

4. Sicherheitselement nach Anspruch 1, **dadurch gekennzeichnet, dass** das erste und das zweite Volumen (1, 2) in verschiedenen Ebenen liegen.

5. Sicherheitselement nach Anspruch 1 oder 4, **dadurch gekennzeichnet, dass** das erste und das zweite Volumen (1, 2) über einen gekrümmten oder einen geknickten Kanal (3) miteinander verbunden sind.

6. Sicherheitselement nach Anspruch 1, **dadurch gekennzeichnet, dass** der Kanal (3) ein Einwegeventil (6) aufweist, mit Durchlassrichtung von dem Volumen (1, 2) ohne beigeordnete Elektrode (4) zu dem Volumen (1, 2) mit beigeordneter Elektrode (4).

7. Sicherheitselement nach Anspruch 1, **dadurch gekennzeichnet, dass** das Material der Innenfläche des Kanals (3) derart auf den elektrisch leitenden Anteil abgestimmt ist, dass dieser die Kanalinnenfläche nicht benetzt, wenn die Elektrode (4) nicht beaufschlagt ist.

8. Sicherheitselement nach Anspruch 1, **dadurch gekennzeichnet, dass** das Volumen (1, 2) mit beigeordneter Elektrode (4) einen Stoff beinhaltet, der mit dem elektrisch leitenden und/oder polaren Anteil in dem einsehbaren Volumen (1, 2) zu einem farbigen Reaktionsprodukt chemisch reagiert, wenn der elektrisch leitende und/oder polare Anteil infolge der Beaufschlagung der Elektrode (4) in das Volumen (1, 2) mit beigeordneter Elektrode (4) transportiert wird.

9. Sicherheitselement nach Anspruch 8, **dadurch gekennzeichnet, dass** zumindest ein Reaktionsprodukt eine höhere Viskosität als der elektrisch leitende und/oder polare Anteil der Flüssigkeit (5) aufweist, oder dem elektrisch leitenden und/oder polaren Anteil eine höhere Zähigkeit verleiht.

10. Sicherheitselement nach einem der Ansprüche 1 bis 9 und ausgeführt unter Verwendung eines Elektrowettinganzeigeelementes für den reversiblen Flüssigkeitstransport, bei dem von jeweils zwei fluidisch verbundenen Volumina (1, 2) nur eines eine elektrisch ansteuerbare Elektrode (4) aufweist.
